# EUROPÄISCHE PATENTSCHRIFT

(11) **EP 1 536 656 B1**
(45) Veröffentlichungstag und Bekanntmachung des Hinweises auf die Patenterteilung: **20.07.2016**
(21) Anmeldenummer: 04027545.5
(22) Anmeldetag: 19.11.2004
(51) Int. Cl.: H04W 24/02, H04W 24/08, H04W 16/18, H04W 36/00, H04W 64/00

(54) **Verfahren und System zum Erzeugen eines dynamischen Zellenplans**
Method and system for generating a dynamic cellular planning
Procédé et système pour élaborer un plan cellulaire dynamique

(30) Priorität: 25.11.2003 DE 10354922
(43) Veröffentlichungstag der Anmeldung: 01.06.2005
(60) Teilanmeldung: 10192177.3
(73) Patentinhaber: Vodafone GmbH, 40549 Düsseldorf (DE)
(72) Erfinder: Alger, Michael, Dr.-Ing., 85540 Haar (DE)
(74) Vertreter: Müller, Thomas

(56) Entgegenhaltungen:
- WO-A-00/28759
- WO-A-02/03350

## Beschreibung

Die vorliegende Erfindung betrifft zunächst ein Verfahren zum Erzeugen/Aktualisieren eines dynamischen Zellenplans eines zellularen Kommunikationsnetzes gemäß dem Oberbegriff von Patentanspruch 1. Darüber hinaus betrifft die Erfindung auch ein System zum Erzeugen/Aktualisieren eines dynamischen Zellenplans.

Zellulare Kommunikationsnetze sind beispielsweise in Form zellularer Mobilfunknetze bekannt. Bei einem bekannten Mobilfunknetz handelt es sich um das sogenannte GSM-Netz (Global Systems for Mobil Communications). Bei einem Mobilfunknetz ist die geographische Fläche in eine Anzahl von Zellen unterteilt, wobei jeder Zelle eine Feststation, eine sogenannte Basisstation, zugeordnet ist. Die einzelnen Basisstationen sind über sogenannte "Base Station Controller (BSC)" mit Funkvermittlungsstellen verbunden, den sogenannten "Mobile Switching Centers (MSC)". Wenn sich in einer Zelle aktive oder in einem Stand-By-Modus befindliche mobile Endeinrichtungen befinden, so werden zumindest zeitweilig Zellinformationsdaten von der entsprechenden Zelle an die mobilen Endeinrichtungen übertragen und dort zumindest zeitweilig abgelegt. Auf diese Weise verfügen die mobilen Endeinrichtungen immer über Informationen betreffend der entsprechenden Zellen in denen sie sich gerade befinden. Wenn es sich bei dem zellularen Kommunikationsnetz um ein Mobilfunknetz und bei den mobilen Endeinrichtungen um Mobiltelefone handelt, entspricht ein Stand-By-Modus einem Zustand, indem die Geräte zwar eingeschaltet sind, jedoch nicht telefoniert wird. Als "aktiv" wird ein Zustand bezeichnet, wenn ein Telefonat geführt wird.

Bei einem Zell-Wechsel-Vorgang (auch Handover-Vorgang genannt), bei dem sich eine mobile Endeinrichtung aus einer Zelle heraus in eine nächste, benachbarte Zelle bewegt, bei der es sich dann um eine Eintrittszelle handelt, werden der mobilen Endeinrichtung auch von dieser Eintrittszelle Zellinformationsdaten übertragen und zumindest zeitweilig abgelegt.

Die einzelnen Zellen sind beim Betreiber des Kommunikationsnetzes mit unterscheidungskräftigen Kennzeichnungen/ Namen versehen, sodass jede Zelle anhand ihrer Kennzeichnung eindeutig identifiziert werden kann. Die einzelnen Zellen sind in einem sogenannten Zellenplan zusammengefasst, wobei ein solcher Zellenplan tabellarisch und/oder auf geographischen Daten basierend vorliegen kann. Auf diese Weise kann jeder einzelnen Zelle zusätzlich zu der sie charakterisierenden Kennzeichnung auch eine eindeutige geographische Position zugeordnet werden. Weiterhin ist es möglich, die einzelnen Zellen mit zusätzlichen Informationen zu verknüpfen.

In jüngster Zeit sind eine Reihe von neuen Servicedienstleistungen entwickelt worden, die auf der Technologie der zellulare Kommunikationsnetze basieren. So ist es beispielsweise möglich, ortsspezifische Informationsdaten zu erzeugen, die anschließend bestimmten Diensten, beispielsweise den sogenannten Location-Based-Services (LBS) zur Verfügung gestellt werden können.

Wenn es sich bei dem zellularen Kommunikationsnetz um ein Mobilfunknetz und bei den mobilen Endeinrichtungen um Mobiltelefone handelt, und wenn diese mobilen Endeinrichtungen aktiv sind, werden von den Mobiltelefonen zumindest zeitweilig spezifische Daten an diejenige Basisstation übertragen, in deren Zelle sich die Mobiltelefone gerade befinden. Bei einem Zell-Wechsel-Vorgang, bei dem sich das aktive Mobiltelefon aus einer Zelle heraus in eine nächste, benachbarte Zelle bewegt, wird ein Verbindungsaufbau zwischen Mobiltelefon und der nächsten Zelle, bei der es sich in diesem Fall dann um eine Eintrittszelle handelt, erzeugt. Dabei werden wiederum spezifische Daten der aktiven Mobiltelefone an die Basisstation dieser nächsten Zelle übertragen. Wenn sich das Mobiltelefon in einem Stand-By-Modus befindet, werden keine spezifischen Daten an die Basisstation übertragen. Allerdings liegen diese Daten im Mobiltelefon vor.

Aus dieser Prozedur heraus sind bereits Verfahren bekannt geworden, wie ein solcher Handover-Vorgang für die Schaffung von bestimmten Diensten genutzt werden kann.

Eine diesbezüglich bekannte Lösung zur Erzeugung von Informationsdaten auf der Basis von in einem zellularen Kommunikationsnetz erzeugten spezifischen Daten mobiler Endeinrichtungen ist beispielsweise in der DE 101 49 943 A1 beschrieben. Bei dieser Lösung werden spezifische Daten wenigstens einer mobilen Endeinrichtung erfasst und in einer zentralen Rechnereinheit bearbeitet. Auf diese Weise können Informationsdaten bezüglich wenigstens einer Zelle des Kommunikationsnetzes erzeugt werden. Bei diesem bekannten Verfahren wird die Fortbewegungszeit wenigstens einer mobilen Endeinrichtung zwischen einem Ausgangspunkt und einem räumlich davon getrennten Endpunkt ermittelt. Dazu werden die spezifischen Daten wenigsten einer am Ausgangspunkt und am Endpunkt befindlichen mobilen Endeinrichtung ermittelt und jeweils mit einer Zeitmarke verknüpft. Die spezifischen Informationen der mobilen Endeinrichtungen werden in wenigstens einer zentralen Rechnereinheit elektronisch miteinander verglichen. Bei Übereinstimmung der spezifischen Daten einer mobilen Endeinrichtung am Ausgangspunkt sowie am Endpunkt wird in der zentralen Rechnereinheit elektronisch die Zeitdifferenz zwischen den Zeitmarken gebildet und daraus die Fortbewegungszeit ermittelt. Auf diese Weise kann die Fortbewegungszeit der mobilen Endeinrichtung ermittelt werden, ohne dass dafür eine spezielle Infrastruktur erforderlich wäre.

Ebenso ist es möglich, mit einem entsprechenden Verfahren zum Erzeugen von ortsspezifischen Informationsdaten eine Verkehrsdatenerfassung durchzuführen. Die Verkehrsdatenerfassung mit Hilfe eines Mobilfunknetzes erfolgt im Wesentlichen durch die Auswertung der spezifischen Daten der mobilen Endeinrichtungen, bei denen es sich beispielsweise um Signalisierungsdaten auf dem Abis-Interface des GSM-Netzes handeln kann. Die räumliche Zuordnung der erfassten Zellinformationsdaten beziehungsweise der Handover-Informationsdaten zu Straßensegmenten erfolgt bisher manuell durch entsprechende Auswahl der Zellen und durch eine entsprechende Darstellung derselben in einer geeigneten Tabelle. In dieser Tabelle sind die einzelnen Zellen entsprechenden Straßensegmenten zugeordnet.

Die Erstellung solcher Tabellen stellt einen signifikanten Arbeitsaufwand dar. In der Praxis hat sich zudem herausgestellt, dass eine solche Zuordnung ständigen Änderungen unterliegt. Konkret müssen ständig die Orte der Zellwechsel mit den Bezeichnungen der genutzten Zellen auf dem Straßennetz ermittelt und eingepflegt werden. Wenn heute zum Beispiel bei Kilometer 17 der A99 ein Handover von Zelle A nach B stattfindet, so kann dies morgen, beispielsweise durch Wetter- oder Laständerungen, beim Kilometer 17,9 sein. Auch ist es denkbar, dass einzelne Zellen vorübergehend abgeschaltet werden. So ist es im Zusammenhang mit dem beschriebenen Beispiel etwa denkbar, dass eine vorübergehende Abschaltung der Zelle B durch ein Handover von Zelle A nach Zelle C bei Kilometer 23,4 ersetzt werden muss.

Diese ständigen Änderungen machen eine aufwendige, zeitnahe und manuelle Pflege der entsprechenden Tabellen beziehungsweise Zellenpläne erforderlich.

In der WO 00/28759 A1 wird ein aus zwei Phasen bestehendes Verfahren beschrieben, mit dem ein Netzwerkplan erzeugt und aktualisiert werden kann. Die Grundlage bei dieser bekannten besteht darin, dass für eine mobile Endeinrichtung zunächst ein Handover-Request gestartet wird. Dieser Handover-Request wird verifiziert. Basierend auf der Verifizierung erfolgt eine Positionsbestimmung der mobilen Endeinrichtung. Damit können die Orte eines Handovers erkannt und gelernt werden, woraus sich in Verbindung mit den Positionsdaten eine Netzwerkkarte erstellen lässt. Während einer Lernphase wird ein Handover-Request von der mobilen Endeinrichtung initiiert. Im Moment des aktivierten Handover-Requests wird der Ort, an dem sich die mobile Endeinrichtung befindet, gespeichert. Daraus entsteht die Netzwerkkarte. Danach erfolgt eine Maintenance-Phase. Dazu wird für eine bestimmte Prozentzahl von mobilen Endeinrichtungen der Ort, an dem ein Handover-Request erfolgt, geprüft. Kommt es zu Abweichungen mit der bestehenden Netzwerkkarte, wird eine erneute Lernphase initiiert. In allen Fällen ist aber zunächst der Handover-Request erforderlich.

In der WO 02/03350 A1 wird ein Verfahren zur Bestimmung der Fahrtrichtung und der Geschwindigkeit von Fahrzeugen beschrieben, in denen sich ein Mobiltelefon befindet. In einem vorgeschalteten Lernprozess werden besondere Fahrzeuge, die mit GPS-Einrichtungen ausgestattet sind, eingesetzt. Findet ein Handover-Vorgang des im Fahrzeug befindlichen Mobiltelefons statt, wird mittels GPS die geographische Position des Handovers bestimmt. Dadurch kann ein Zellenplan erstellt werden, der für das spätere Verkehrsinformationsverfahren genutzt wird. Allerdings kann dieser einmal erstellte Zellenplan später nicht mehr verändert werden.

Aufgabe der Erfindung ist es daher, ein verbessertes Verfahren zum Erzeugen/Aktualisieren eines Zellenplans bereitzustellen, mit dem die zuvor beschriebenen Nachteile umgangen werden können. Insbesondere soll ein Verfahren bereitgestellt werden, mit dem ein Zellenplan resourcenschonend automatisch erzeugt beziehungsweise aktualisiert werden kann, wobei Änderungen dynamisch erfasst werden. Weiterhin soll ein entsprechend verbessertes System bereitgestellt werden.

Diese Aufgabe wird erfindungsgemäß gelöst durch das Verfahren zum Erzeugen/Aktualisieren eines dynamischen Zellenplans mit den Merkmalen gemäß dem unabhängigen Patentanspruch 1, sowie das System zum Erzeugen/Aktualisieren eines dynamischen Zellenplans mit den Merkmalen gemäß dem unabhängigen Patentanspruch 14. Weitere Vorteile, Merkmale, Details und Aspekte der Erfindung ergeben sich aus den Unteransprüchen, der Beschreibung sowie den Zeichnungen. Merkmale und Details, die im Zusammenhang mit dem erfindungsgemäßen Verfahren zum Erzeugen/Aktualisieren eines dynamischen Zellenplans beschrieben sind, gelten dabei selbstverständlich auch im Zusammenhang mit dem erfindungsgemäßen System, und umgekehrt.

Gemäß dem ersten Aspekt der Erfindung wird ein Verfahren zum Erzeugen/Aktualisieren eines dynamischen Zellenplans eines zellularen Kommunikationsnetzes bereitgestellt, wobei das Kommunikationsnetz aus einer Anzahl von Zellen gebildet ist, die in einem Zellenplan zusammengefasst sind, wobei in einer Zelle befindlichen aktiven oder in einem Stand-By-Modus befindlichen mobilen Endeinrichtungen zumindest zeitweilig Zellidentifikationsdaten, die eine genaue Identifikation der Zelle möglich machen, von der Zelle übertragen und zumindest zeitweilig in den mobilen Endeinrichtungen abgespeichert werden und wobei bei einem Zellenwechsel der mobilen Endeinrichtungen von der Zelle in eine nächste, benachbarte Eintrittszelle, in den mobilen Endeinrichtungen von der Eintrittszelle übertragene Zellidentifikationsdaten, die eine genaue Identifikation der Eintrittszelle möglich machen, zumindest zeitweilig abgespeichert werden.

Das Verfahren ist erfindungsgemäß dadurch gekennzeichnet, dass in vorgegebenen Zeitabständen die in den mobilen Endeinrichtungen abgelegten Zellidentifikationsdaten ausgelesen werden, dass dann, wenn sich die ausgelesenen Zellidentifikationsdaten ändern, mittels eines Standort-Ermittlungsverfahrens die genaue Position der mobilen Endeinrichtung ermittelt wird, wobei die Änderung der Zellidentifikationsdaten dem geographischen Ort eines Zellenwechsels entspricht, dass die ausgelesenen Zellidentifikationsdaten dann, wenn sich diese ändern, mit den ermittelten Positionsdaten der mobilen Endeinrichtung verknüpft und daraus Zellwechselortsdaten ermittelt werden, und dass aus den so ermittelten Zellwechselortsdaten der Zellenplan automatisch erzeugt/aktualisiert wird. Zunächst ist vorgesehen, dass das Verfahren in einem zellularen Kommunikationsnetz durchgeführt wird. Dabei ist die Erfindung jedoch nicht auf bestimmte Typen zellularer Kommunikationsnetze beschränkt. Besonders vorteilhaft kann das Verfahren jedoch unter Verwendung eines zellularen Mobilfunknetzes durchgeführt werden, wobei in einem solchen Fall die mobilen Endgeräte zumindest eine Mobilfunkkomponente umfassen. Dabei ist die Erfindung nicht auf bestimmte Arten von mobilen Endeinrichtungen beschränkt. Einige nicht ausschließliche Beispiele hierzu werden im weiteren Verlauf der Beschreibung näher erläutert.

Das erfindungsgemäße Verfahren kann sowohl zur Erzeugung eines dynamischen Zellenplans als auch zu dessen Aktualisierung herangezogen werden. Basis hierbei bilden Zellinformationsdaten, die von einer Zelle an die mobilen Endeinrichtungen übertragen und dort zumindest zeitweilig abgelegt beziehungsweise abgespeichert werden. Bei den Zellinformationsdaten handelt es sich erfindungsgemäß um Zellidentifikationsdaten, also solche Daten, die eine genaue Identifizierung der Zelle möglich machen. Hierbei kann es sich beispielsweise um Daten zur Kennzeichnung der Zelle und dergleichen handeln, etwa um deren Nummerierung.

Das erfindungsgemäße Verfahren ist nunmehr in der Lage, den Zellenplan eines zellularen Kommunikationsnetzes automatisch zu erzeugen und zu aktualisieren, wobei insbesondere die Aktualisierung dynamisch erfolgen kann. Dabei kann insbesondere dem Umstand Rechnung getragen werden, dass sich der Ort eines Zellenübergangs von einer Zelle in eine benachbarte nächste Zelle über die Zeit verändern kann.

Zunächst ist erfindungsgemäß vorgesehen, dass zumindest zeitweilig die in den mobilen Endeinrichtungen abgelegten Zellinformationsdaten ausgelesen werden.

Dabei ist erfindungsgemäß vorgesehen, dass die Zellinformationsdaten in vorgegebenen Zeitabständen aus den mobilen Endeinrichtungen ausgelesen werden. Beispielhaft könnte denkbar sein, dass die Zellinformationsdaten in regelmäßigen Abständen von beispielsweise etwa einer halben Sekunde aus den mobilen Endeinrichtungen ausgelesen werden. Natürlich handelt es sich dabei nur um ein Beispiel, sodass auch andere Zeitabstände vorgegeben werden können. Ebenso ist es natürlich auch denkbar, dass die Zellinformationsdaten permanent aus den Endeinrichtungen ausgelesen werden.

Zumindest dann, wenn sich die ausgelesenen Zellinformationsdaten ändern, wird mittels eines Standort-Ermittlungsverfahrens die genaue Position der mobilen Endeinrichtung ermittelt. Dabei ist die Erfindung nicht auf bestimmte Arten von Standort-Ermittlungsverfahren beschränkt. Einige nicht ausschließliche Beispiele hierzu werden im weiteren Verlauf der Beschreibung näher erläutert.

Wie weiter oben bereits beschrieben wurde, werden die Zellinformationsdaten einer Zelle, in der sich eine mobile Endeinrichtung gerade befindet, zumindest zeitweilig auf die entsprechende mobile Endeinrichtung übertragen und dort zumindest zeitweilig abgelegt. Wenn sich diese Zellinformationsdaten ändern, bedeutet dies, dass die mobile Endeinrichtung eine Zelle verlässt beziehungsweise verlassen hat und in eine nächste Zelle, eine sogenannte Eintrittszelle, hinüberwechselt. Die Änderungen der Zellinformationsdaten entsprechen somit einem Handover-Vorgang der mobilen Endeinrichtung zwischen zwei Zellen. Aus diesem Grund entspricht eine Änderung der Zellinformationsdaten dem geographischen Ort eines Zellenwechsels.

Wenn folglich bei einer Änderung der ausgelesenen Zellinformationsdaten gleichzeitig auch die Position der mobilen Endeinrichtung ermittelt wird, bedeutet dies, dass die ermittelte Position dem Übergang zwischen zwei Zellen und damit der Grenze zwischen den beiden Zellen entspricht. Auf diese Weise kann unabhängig von den jeweiligen äußeren Einflüssen immer genau ermittelt werden, wo sich die aktuelle Grenze zwischen zwei benachbarten Zellen befindet.

Aus den auf diese Weise ermittelten Zellwechselortsdaten kann der Zellenplan automatisch erzeugt/aktualisiert werden Die Erfassung der jeweiligen Position der mobilen Endeinrichtungen erfolgt immer dann, wenn auch tatsächlich eine Änderung der Zellinformationsdaten registriert wird. Ebenso kann natürlich auch vorgesehen sein, dass eine Positionserfassung in regelmäßigen Abständen oder gar kontinuierlich erfolgt.

Je häufiger ein Auslesen der Zellinformationsdaten aus den mobilen Endeinrichtungen sowie eine Ermittlung der genauen Position der mobilen Endeinrichtungen erfolgt, desto schneller kann eine Änderung der Zellgeometrien beziehungsweise Zellgrößen - etwa aufgrund äußerer Bedingungen - festgestellt werden. Meistens ist es jedoch ausreichend, wenn ein Auslesen der Zellinformationsdaten aus den mobilen Endeinrichtungen nicht kontinuierlich, sondern in regelmäßigen Abständen und eine Positionserfassung nur bei tatsächlich erkannten Änderungen der Zellinformationsdaten erfolgt.

Auftretende Änderungen innerhalb des Zellenplans können mit dem erfindungsgemäßen Verfahren automatisch erkannt und berücksichtigt werden, wobei der Zellenplan automatisch erzeugt/aktualisiert wird und den vorherrschenden reellen Bedingungen auch tatsächlich entspricht. Eine wie bisher erforderliche manuelle Erzeugung/Aktualisierung des Zellenplans mit den einhergehenden Nachteilen kann mit dem erfindungsgemäßen Verfahren nunmehr vermieden werden.

Beispielsweise kann vorgesehen sein, dass die Zellinformationsdaten automatisch aus den mobilen Endeinrichtungen ausgelesen werden. Ebenso ist es denkbar, dass die Zellinformationsdaten nur auf Anforderung (On-Demand) einer zusätzlichen Instanz, etwa einer Auswertereinrichtung in Form einer Rechnereinheit oder dergleichen, ausgelesen werden. Die letztgenannte Variante hat den Vorteil, dass die Verbindungskosten zwischen der mobilen Endeinrichtung und derjenigen Instanz, in der die ausgelesenen Zellinformationsdaten letztendlich zum dynamischen Zellenplan verarbeitet werden, möglichst gering gehalten werden können. Auf diese Weise kann das Verfahren beispielsweise dann aktiviert werden, wenn ein tatsächlicher Bedarf an neuen Informationen besteht, sodass die Kommunikationskosten gering gehalten werden können. Das Verfahren wird dann nur bei eintretenden oder geplanten Änderungen aktiviert, während es in einer Zeit ohne Änderungen deaktiviert bleibt.

Vorteilhaft kann vorgesehen sein, dass bei einer Änderung der ausgelesenen Zellinformationsdaten gleichzeitig auch der Zeitpunkt der Änderung der ausgelesenen Zellinformationsdaten mitbestimmt wird.

Wie weiter oben bereits dargelegt wurde, ist die Erfindung nicht auf bestimmte Standort-Ermittlungsverfahren zur Bestimmung der jeweils genauen Position der mobilen Endeinrichtungen beschränkt. Vielmehr ergeben sich geeignete Standort-Ermittlungsverfahren jeweils aus der entsprechenden Ausgestaltung der mobilen Endeinrichtungen beziehungsweise des Kommunikationsnetzes. So ist es beispielsweise möglich, die Positionsdaten der mobilen Endeinrichtungen mittels eines satellitengestützten Standort-Ermittlungsverfahrens (etwa GPS) zu ermitteln. In einem solchen Fall ist es erforderlich, dass die mobilen Endeinrichtungen auch über ein entsprechendes Modul verfügen, das eine solche Positionsbestimmung zulässt. Wenn die mobilen Endeinrichtungen auch eine Mobilfunkkomponente beinhalten, könnten die Positionsdaten beispielsweise auch mittels eines GSM-basierten Standort-Ermittlungsverfahrens ermittelt werden.

Zur Ortung mobiler Endeinrichtungen über bestimmte Standort-Ermittlungsverfahren sind bereits verschiedene Lösungen bekannt geworden. So ist in der DE 198 03 960, deren Offenbarungsgehalt in soweit in die Beschreibung der vorliegenden Erfindung mit einbezogen wird, ein Verfahren sowie ein System zur Nutzung von modernen Ortungssystemen in Mobilfunksystemen beschrieben.

Die Ortung eines Mobiltelefons kann beispielsweise auch nach dem sogenannten EOTD-Verfahren (Enhanced Observed Time Difference) erfolgen. Dabei werden Laufzeitunterschiede von Signalen eines Mobiltelefons zu mehreren Sendern gemessen. Aus den ermittelten Werten kann dann unter Verwendung geeigneter Algorithmen automatisch der Standort des Mobiltelefons ermittelt werden.

Bevorzugt weist die mobile Endeinrichtung jedoch Mittel zur satellitengestützten Positionsbestimmung auf, wobei zumindest bei einer Änderung der ausgelesenen Zellinformationsdaten mittels eines satellitengestützten Standort-Ermittlungsverfahrens (beispielsweise GPS) die genaue Position der mobilen Endeinrichtung ermittelt wird.

Die Erzeugung beziehungsweise Aktualisierung des Zellenplans erfolgt in einer Weise, dass die ausgelesenen Zellinformationsdaten zumindest dann, wenn diese sich ändern, mit ermittelten Positionsdaten der entsprechenden mobilen Endeinrichtungen verknüpft werden. Diese Verknüpfung erfolgt vorteilhaft in einer dafür vorgesehenen Rechnereinheit. Weiterhin kann vorgesehen sein, dass die ausgelesenen Zellinformationsdaten und/oder die ermittelten Positionsdaten und/oder die ermittelten Zellwechselortsdaten zumindest temporär in wenigstens einer Speichereinrichtung abgespeichert werden. Dadurch kann erreicht werden, dass die ermittelten beziehungsweise berechneten Daten nicht gleich weiter bearbeitet werden müssen. Außerdem lassen sich auf diese Weise die ermittelten beziehungsweise berechneten Daten über einen längeren Zeitraum sammeln, was retrospektive Betrachtungen und Auswertungen ermöglicht.

Dabei ist die Erfindung nicht auf bestimmte Ausgestaltungsformen im Zusammenhang mit der Rechnereinheit und/oder der Speichereinrichtung beschränkt. Beispielsweise kann vorgesehen sein, dass die Rechnereinheit und/oder die Speichereinrichtung der mobilen Endeinrichtung zugeordnet ist/sind, wobei dann die Zellwechselortsdaten innerhalb der mobilen Endeinrichtung erzeugt werden. In einem solchen Fall können insbesondere die Kommunikationskosten niedrig gehalten werden. Die Zellinformationsdaten werden ohnehin in regelmäßigen Abständen auf die mobile Endeinrichtung übertragen und dort zumindest zeitweilig abgelegt beziehungsweise abgespeichert. Die Überprüfung, ob eine Änderung der Zeltinformationsdaten vorliegt, erfolgt allein in der mobilen Endeinrichtung, sodass für diese keinerlei Veranlassung besteht, mit einer externen Rechnereinheit - was Kommunikationskosten erzeugen würde - zu kommunizieren. Erst dann, wenn auch tatsächlich eine Änderung der Zellinformationsdaten erkannt wird, werden in der mobilen Endeinrichtung die entsprechenden Zellwechselortsdaten erzeugt. Diese erzeugten Zellwechselortsdaten werden anschließend zur weiteren Auswertung beziehungsweise zur dynamischen Erzeugung/Aktualisierung des Zellenplans an eine weitere Instanz, beispielsweise eine zentrale Rechnereinheit oder dergleichen, weitergeleitet.

In anderer Ausgestaltung kann vorgesehen sein, dass die Rechnereinheit und/oder der Speichereinrichtung dem Kommunikationsnetz zugeordnet ist/sind, wobei die ausgelesenen Zellinformationsdaten und die ermittelten Positionsdaten zur Rechnereinheit übertragen werden und wobei die Zellwechselortsdaten innerhalb der zentralen Rechnereinheit erzeugt werden. Der Vorteil bei dieser Ausgestaltung liegt darin, dass die mobilen Endeinrichtungen relativ einfach ausgestaltet sein können. Diese müssen lediglich in der Lage sein, die entsprechenden Daten auf die zentrale Rechnereinheit zu übertragen. Die Erzeugung der Zellwechselortsdaten aus den erfassten Daten erfolgt dann zentral in einer einzigen Rechnereinheit. Vorteilhaft handelt es sich dabei um diejenige Rechnereinheit, in der auch der Zellenplan erzeugt beziehungsweise aktualisiert wird.

Vorteilhaft kann vorgesehen sein, dass die dynamische Erzeugung/Aktualisierung des Zellenplans in definierten Zeitabständen aus den gespeicherten Zellwechselortsdaten erfolgt. So ist es beispielsweise möglich, dass die ausgelesenen Zellinformationsdaten und/oder die ermittelten Positionsdaten und/oder die ermittelten Zellwechselortsdaten zunächst in einer Speichereinrichtung gespeichert werden, und dass diese regelmäßig, beispielsweise zu verkehrsschwachen Zeiten innerhalb des Kommunikationsnetzes an eine zentrale Rechnereinheit, beispielsweise einen zentralen Server, geschickt werden.

Vorteilhaft kann somit vorgesehen sein, dass die erzeugten Zellwechselortsdaten in definierten Zeitabständen zu einer Rechnerzentrale übertragen werden und dass der Zellenplan in der Rechnzentrale dynamisch erzeugt/aktualisiert wird. Dabei ist vorteilhaft vorgesehen, dass die erzeugten beziehungsweise ermittelten und übertragenen Daten in der Rechnzentrale datentechnisch konsolidiert und in den entsprechenden Zellenplan eingepflegt werden. Dies erfolgt insbesondere automatisch, sodass die bisher erforderlichen manuellen Arbeitsschritte nunmehr entfallen können.

Wie weiter oben bereits ausgeführt wurde, ist die Erfindung nicht auf bestimmte Typen mobiler Endeinrichtungen beschränkt, mittels derer die Erzeugung/Aktualisierung des Zellenplans erfolgt. Vielmehr ergibt sich die Ausgestaltung der mobilen Endeinrichtungen je nach Ausgestaltung des zellularen Kommunikationsnetzes, nach Art und Weise der verwendeten Standort-Ermittlungsverfahren und dergleichen. Nachfolgend werden einige nicht ausschließliche Beispiele für geeignete mobile Endeinrichtungen beschrieben.

Wenn das Verfahren unter Verwendung eines zellularen Mobilfunknetzes durchgeführt wird, weisen die mobilen Endeinrichtungen vorzugsweise zumindest ein Mobilfunkmodul, beispielsweise ein GSM-Modul auf. Über ein solches GSM-Modul liegt permanent die zu einer bestimmten Zeit empfange Zellinformation vor. Zellinformationsdaten, wie beispielsweise Zellennamen und deren Wechsel, liegen in der mobilen Endeinrichtung, beispielsweise im sogenannten "Idle Mode" vor. Ebenso können diese Informationen auch im Kommunikationsnetz im sogenannten "Active Mode" vorliegen.

Beispielsweise kann es sich in einem solchen Fall bei den mobilen Endeinrichtungen auch um Mobiltelefone handeln. Weiterhin kann es sich bei der mobilen Endeinrichtung beispielsweise auch um mobile Computer, PDA's (Personal Digital Assistent) und dergleichen handeln.

Wenn die Erzeugung/Aktualisierung eines dynamischen Zellenplans beispielsweise dazu verwendet wird, um - wie weiter unten noch näher beschrieben wird - Verkehrsinformationsdaten zu erzeugen, kann es sich bei den mobilen Endeinrichtungen für die Erzeugung/Aktualisierung des Zellenplans um telematische Endgeräte in Fahrzeugen handeln, die auf dem Straßennetz unterwegs sind. Das können beispielsweise sogenannte On-Board-Units (OBU's) sein, mit denen mautpflichtige LKW ausgestattet sind. Weiterhin können die mobilen Endeinrichtungen auch als Navigationseinrichtungen in Fahrzeugen, und hier insbesondere in Form von Java-Navigationseinrichtungen, ausgebildet sein.

Nachfolgend wird ein konkretes, nicht ausschließliches Beispiel beschrieben, wie die Daten von den vorstehend genannten Fahrzeugen, die mit telematischen Endeinrichtungen ausgestattet sein können und auf dem Straßennetz unterwegs sind, ausgenutzt werden können, um damit einen Zellenplan des Kommunikationsnetzes dynamisch erzeugen/aktualisieren zu können.

Wenn diese Fahrzeuge beispielsweise mit den sogenannten On-Board-Units oder aber mit Java-Navigationssystemen ausgerüstet sind, führen diese stets ein eingeschaltetes GSM-Endgerät mit sich, mit dem permanent die zur Zeit empfangbare Zellinformation vorliegt. Weiterhin führen diese Fahrzeuge in ihrer mobilen Endeinrichtung beispielsweise einen GPS-Empfänger mit, der zu dieser Zellinformation permanent die tatsächliche Position und die genaue Uhrzeit kennt. Derartige Fahrzeuge fahren auf einer Straße und ermitteln damit in Echtzeit die Orte der Zellenwechsel auf dem Straßennetz.

Über derartige Fahrzeuge lässt sich folglich der Zellenplan des zellularen Kommunikationsnetzes dynamisch erzeugen beziehungsweise aktualisieren, wobei dies insbesondere automatisch erfolgt.

Das wie vorstehend beschriebene erfindungsgemäße Verfahren zum Erzeugen/Aktualisieren eines Zellenplans macht sich den Umstand zu Nutze, dass in den mobilen Endeinrichtungen Zellinformationsdaten und/oder spezifische Daten der mobilen Endeinrichtungen vorliegen, dass die Daten über ein Standort-Ermittlungsverfahren, beispielsweise mittels GPS, "verortet" werden und dass der Ort eines Zellwechsels gesammelt und irgendwann übertragen wird. Dies gilt insbesondere auch bei mobilen Endeinrichtungen, die sich in einem Stand-By-Modus befinden. Bei einer aktiven mobilen Endeinrichtung passiert jedoch das Gleiche. Auch hier wird der genaue Ort über ein Standort-Ermittlungsverfahren ermittelt.

Ein entsprechend erzeugter/aktualisierter Zellenplan kann vorteilhaft genutzt werden, um ortsspezifische Informationsdaten zu erzeugen. Dies wird nachfolgend im Zusammenhang mit einem weiteren Aspekt der Erfindung beschrieben.

Ein Verfahren zum Erzeugen von ortsspezifischen Informationsdaten auf der Basis von in einem zellularen Kommunikationsnetz erzeugen spezifischen Daten aktiver oder in einem Stand-By-Betrieb befindlicher mobiler Endeinrichtungen, wobei das Kommunikationsnetz aus einer Anzahl von Zellen gebildet ist, wobei spezifische Daten der mobilen Endeinrichtungen erfasst werden und wobei die Erzeugung der Informationsdaten auf der Basis der spezifischen Daten der mobilen Endeinrichtungen erfolgt, ist dadurch gekennzeichnet, dass die spezifischen Daten der Endeinrichtungen mit spezifischen Zellinformationsdaten von Zellen, in denen sich die mobilen Endeinrichtungen befinden, verknüpft werden und dass die Zellinformationsdaten auf einen dynamischen Zellenplan des Kommunikationsnetzes abgebildet werden, wobei der Zellenplan mittels eines Verfahrens zum Erzeugen/Aktualisieren eines Zellenplans automatisch erzeugt/aktualisiert wird. Dabei kann insbesondere vorgesehen sein, dass der Zellenplan mittels eines wie vorstehend beschriebenen erfindungsgemäßen Verfahrens zum Erzeugen/Aktualisieren des Zellenplans dynamisch erzeugt/aktualisiert wird. Bei den spezifischen Daten der mobilen Endeinrichtungen kann es sich beispielsweise um solche Daten handeln, die während des Betriebs der mobilen Endeinrichtungen ohnehin anfallen. Hierbei kann es sich beispielsweise um Daten in Bezug auf die Bewegung der mobilen Endeinrichtungen, etwa zwischen verschiedenen Zellen (Handover zwischen Zellen) und/oder innerhalb einer Zelle, die zeitabhängige und/oder örtliche Verteilung der mobilen Endeinrichtungen, die Gesprächsaufbaurate und/oder -abbaurate und dergleichen handeln.

Wenn das Verfahren im Zusammenhang mit einem zellularen Mobilfunknetz betrieben wird, ist es grundsätzlich möglich, als spezifische Daten der in diesem Fall vorteilhaft als Mobiltelefon ausgebildeten Endeinrichtungen solche Daten zu verwenden, die im Rahmen der grundlegenden Funktionsweise des Mobilfunknetzes ohnehin anfallen. Darunter fallen neben den vorstehend genannten Datentypen auch Echtzeit- und Zellaktivitätsdaten von aktiven mobilen Endeinrichtungen. Diese werden von den jeweiligen Basisstationen empfangen und in der Regel über die BSC's und MSC's zur weiteren Bearbeitung, Archivierung und dergleichen weitergeleitet. Dabei ist es nicht unbedingt erforderlich, dass mittels der Mobiltelefone zur Erfassung von spezifischen Daten gerade auch ein Telefonat geführt werden müsste. Vielmehr reicht es aus, wenn sich ein Mobiltelefon in einem Stand-By-Modus befindet, das heißt, wenn es lediglich eingeschaltet ist. In einem solchen Fall sendet das Mobiltelefon in regelmäßigen Abständen so genannte Registrierungssignale aus, die dann von in der Nähe befindlichen Basisstationen erfasst werden. Dabei handelt es sich um eine grundlegende Funktionsweise eines zellularen Mobilfunknetzes.

Gemäß diesem Verfahren ist vorgesehen, dass die ermittelten beziehungsweise erfassten spezifischen Daten der Endeinrichtungen mit spezifischen Zellinformationsdaten von denjenigen Zellen, in denen sich die mobilen Endeinrichtungen gerade befinden, verknüpft werden. Auf diese Weise wird es zunächst möglich, die mobilen Endeinrichtungen einer bestimmten Zelle zuzuordnen. Dabei ist die Erfindung nicht auf bestimmte spezifische Zellinformationsdaten beschränkt, mit denen die spezifischen Daten der Endeinrichtungen verknüpft werden könnten. Beispielsweise kann es sich dabei, sowie beim ersten Aspekt der Erfindung auch, um Zellidentifikationsdaten handeln.

Vorteilhaft kann vorgesehen sein, dass das Verfahren zum dynamischen Erzeugen/Aktualisieren des Zellenplans mit einer Anzahl mobiler Endeinrichtungen durchgeführt wird, die einer Teilmenge der im zellularen Kommunikationsnetz befindlichen mobilen Endeinrichtungen entspricht. Diesbezüglich sind die unterschiedlichsten Realisierungsvarianten des Verfahrens denkbar. So ist es beispielsweise möglich, dass die mobilen Endeinrichtungen, mittels derer der Zellenplan erzeugt/aktualisiert wird, grundsätzlich anders aufgebaut sind und andere Funktionen haben, als die mobilen Endeinrichtungen, die zum Erzeugen der ortsspezifischen Informationsdaten herangezogen werden. In einem solchen Fall haben alle mobilen Endeinrichtungen jedoch gemeinsam, dass sie über zumindest ein Kommunikationsmodul verfügen, mittels dessen sie im Kommunikationsnetz kommunizieren können. Dies soll anhand eines nicht ausschließlichen Beispiels erläutert werden.

So ist es beispielsweise denkbar, dass der dynamische Zellenplan unter Verwendung von mobilen Endeinrichtungen erfolgt, die in Form von On-Board-Units, Navigationssystemen oder dergleichen in Fahrzeugen eingebaut sind. Die Erzeugung der eigentlichen Informationsdaten kann jedoch mit Hilfe von mobilen Endeinrichtungen erfolgen, die im Falle eines Mobilfunknetzes als Mobiltelefone ausgebildet sein können. Die erstgenannten mobilen Endeinrichtungen haben die Aufgabe, den Zellenplan des Kommunikationsnetzes zu erzeugen beziehungsweise zu aktualisieren, wobei insbesondere aufgrund von äußeren Einflüssen auftretende Änderungen berücksichtigt werden können.

Dieser Zellenplan ist Bestandteil des Verfahrens zum Erzeugen von ortsspezifischen Informationsdaten. Bei diesem Verfahren geht es zunächst darum, die spezifischen Daten der Endeinrichtungen mit spezifischen Zellinformationsdaten von Zellen, in denen sich die mobilen Endeinrichtungen gerade befinden, zu verknüpfen. In einem weiteren Verfahrensschritt werden diese Zellinformationsdaten anschließend auf den dynamischen Zellenplan des Kommunikationsnetzes abgebildet. Bei diesem Zellenplan handelt es sich jedoch immer um einen solchen, der die aktuellen Gegebenheiten widerspiegelt, sodass mit dem Verfahren stets genau ortsspezifische Informationsdaten erzeugt werden können.

Vorteilhaft kann vorgesehen sein, dass mit dem Verfahren Informationsdaten im Zusammenhang mit Location-Based-Services, insbesondere Verkehrsinformationsdaten erzeugt werden können. So ist es beispielsweise denkbar, dass mit dem Verfahren die Fortbewegungszeit und/oder die Fortbewegungsgeschwindigkeit von Endeinrichtungen durch eine oder mehrere Zelle(n) des Kommunikationsnetzes ermittelt wird. Ebenso ist es möglich, dass mit dem Verfahren Verkehrsinformationen erzeugt werden. Dabei ist die Erfindung jedoch nicht auf bestimmte Arten von Verkehrsinformationen beschränkt. So ist es beispielsweise möglich, Verkehrsinformationen zu erzeugen, die die aktuelle Verkehrslage auf Straßen widerspiegeln. Auch kann das Verfahren als Navigationshilfe eingesetzt werden oder aber als statistische Grundlage für die Verkehrsplanung - etwa von öffentlichen Stellen - herangezogen werden.

Außerhalb der Erzeugung von Verkehrsinformationsdaten ist es mit dem Verfahren auch möglich, Informationsdaten im Zusammenhang mit sogenannten Location-Based-Services (LBS) oder dergleichen zu erzeugen. Bei einem Location-Based-Service wird zunächst die Position einer Endeinrichtung, für die dieser Dienst angeboten wird, ermittelt. Aufgrund dieser Positionsdaten werden dann ortsspezifische Dienste angeboten, ortsspezifische Interaktionen zwischen Endeinrichtungen und anderen Endeinrichtungen und anderen Einrichtungen durchgeführt und dergleichen.

Vorteilhaft kann dabei vorgesehen sein, dass die einzelnen Zellen im Zellenplan des Kommunikationsnetzes mit Ortsdaten verknüpft sind. Dabei kann, sofern das Verfahren im Zusammenhang mit Verkehrsinformationsdaten eingesetzt wird, insbesondere vorgesehen sein, dass die einzelnen Zellen im Zellenplan des Kommunikationsnetzes auf die digitale Karte eines Straßennetzes abgebildet werden.

Durch das Verfahren wird somit ein automatischer Abgleich des die Straßen überdeckenden Teils des tatsächlichen, dynamischen Zellenplans ermöglicht, wobei ein automatischer Betrieb des Verfahrens ohne die manuelle Pflege der Zellenabdeckung ermöglicht wird.

Ein System zum Erzeugen von Informationsdaten auf der Basis in einem zellularen Kommunikationsnetz erzeugten spezifischen Daten aktiver oder in einem Stand-By-Betrieb befindlicher mobiler Endeinrichtungen, wobei das Kommunikationsnetz aus einer Anzahl von Zellen gebildet ist, weist Mittel zur Durchführung des wie vorstehend beschriebenen Verfahrens zum Erzeugen von ortsspezifischen Informationsdaten auf.

Weiterhin wird auch ein System zum Erzeugen/Aktualisieren eines dynamischen Zellenplans eines zellularen Kommunikationsnetzes bereitgestellt, wobei das Kommunikationsnetz aus einer Anzahl von Zellen gebildet ist, die in den Zellenplan zusammengefasst sind und wobei das System Mittel zur Durchführung des wie vorstehend beschriebenen erfindungsgemäßen Verfahrens zum Erzeugen/Aktualisieren eines dynamischen Zellenplans aufweist.

Das den beiden vorstehen genannten Systemen zugrundeliegende Kommunikationsnetz ist vorteilhaft als zellulares Mobilfunknetz ausgebildet, wobei in einem solchen Fall die mobilen Endeinrichtungen als Mobiltelefone und/oder als On-Board-Units (OBUs) und/oder als Navigationseinrichtungen in Fahrzeugen ausgebildet sein können. In einem solchen Fall eignen sich die beiden vorstehenden Systeme insbesondere zur Erzeugung von Verkehrsinformationen.

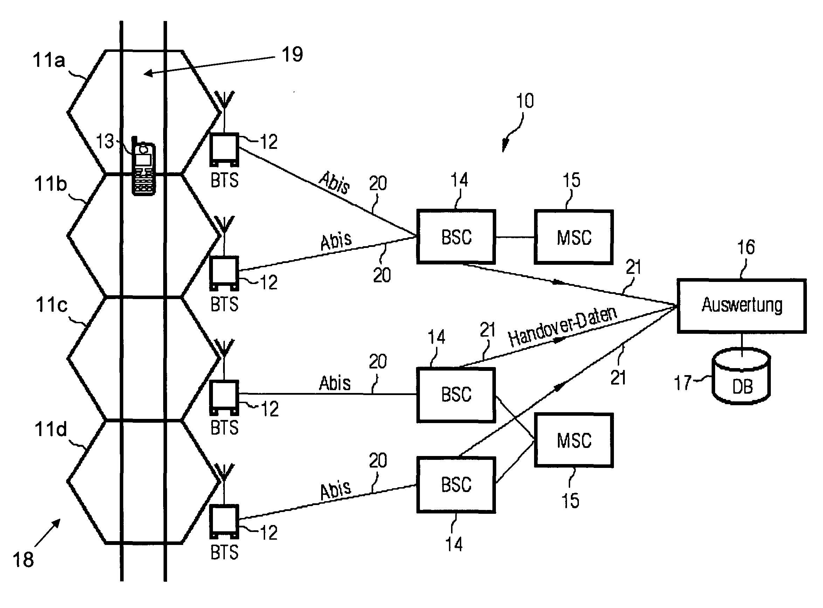

Die Erfindung wird nun anhand eines Ausführungsbeispiels unter Bezugnahme auf die beiliegende Zeichnung näher erläutert. Dabei zeigt die einzige Figur ein erfindungsgemäßes System zum Verfolgen von Zell-Wechsel-Vorgängen mobiler Endeinrichtungen, mittels dessen die erfindungsgemäßen Verfahren durchführbar sind.

In der einzigen Figur ist ein als Mobilfunknetz ausgebildetes zellulares Kommunikationsnetz 10 dargestellt, dessen geographische Fläche in eine Anzahl von Zellen 11 aufgeteilt ist. Im vorliegenden Beispiel sind der besseren Übersicht halber nur vier solcher Zellen 11 a, 11 b, 11 c und 11 d dargestellt. Alle Zellen 11 gemeinsam sind in einem Zellenplan 18 zusammengefasst. Der Zellenplan 18 ist weiterhin einem Straßennetz zugeordnet, wobei im dargestellten Beispiel der Einfachheit halber nur eine einzige Straße 19 dargestellt ist, die durch die Zellen 11a bis 11 d verläuft. Die Zuordnung der einzelnen Zellen 11 zu den Segmenten der Straße 19 erfolgt durch eine Darstellung in einer geeigneten Tabelle.

Diese Zuordnung unterliegt in der Praxis ständigen Änderungen, die sich aufgrund äußerer Einflüsse ergeben können. Aus diesem Grund müssen ständig die Orte der Zellwechsel mit den Zellinformationsdaten der benutzten Zellen, beispielsweise mit den Bezeichnungen der genutzten Zellen auf dem Straßennetz ermittelt und in die Tabelle eingepflegt werden.

Zur Erzeugung/Aktualisierung des Zellenplans 18 können beispielsweise Daten von Fahrzeugen genutzt werden, die mit telematischen Endgeräten ausgestattet auf dem Straßennetz 19 unterwegs sind. Dies können beispielsweise alle mit On-Board-Units ausgestatteten mautpflichtigen LKW sein oder alle mit Java-Navigationssystemen ausgestatteten PKW. Diese Fahrzeuge haben insbesondere folgende Eigenschaften:
Die Fahrzeuge führen in ihren mobilen Endeinrichtungen ein eingeschaltetes GSM-Endgerät mit sich, in dem permanent die zur Zeit empfangbare Zellinformation vorliegt. Zellennamen und deren Wechsel liegen im Endgerät im "Idle Mode" vor, wie im Kommunikationsnetz 10 im "Active Mode". Weiterhin führen die mobilen Endeinrichtungen einen GPS-Empfänger mit, der zu dieser Zellinformation permanent den "tatsächlichen Ort" und die genaue Uhrzeit kennt. Die mit den mobilen Endeinrichtungen ausgestatteten Fahrzeuge fahren auf der Straße 19 und ermitteln damit in Echtzeit die Orte der Zellenwechsel auf dem Straßennetz.

Dazu ist vorgesehen, dass in regelmäßigen Abständen, beispielsweise alle halbe Sekunde, die Zellinformation aus dem GSM-Modem der mobilen Endeinrichtung im Fahrzeug ausgelesen wird. Bei einer Änderung dieser Zellinformationsdaten wird ebenfalls die Uhrzeit und die entsprechende GPS-Koordinate ermittelt. Beide Werte werden gespeichert und regelmäßig, beispielsweise einmal pro Nacht und zu verkehrsschwachen Zeiten innerhalb des Kommunikationsnetzes von den mobilen Endeinrichtungen an eine zentrale Rechnereinheit geschickt. Dort werden die Daten datentechnisch konsolidiert, beispielsweise mittels "Map Matching" auf die Karte des Straßennetzes 19 abgebildet und in die oben genannte Tabelle eingepflegt. Auf diese Weise ist zu jeder Zeit ein automatischer Abgleich des die Straße 19 überdeckenden Teils des tatsächlichen Zellenplans 18 vorhanden, wodurch beispielsweise ein automatischer Betrieb eines Verkehrserfassungssystems ermöglicht wird.

Bei einem solchen Verkehrserfassungssystem handelt es sich beispielsweise um ein Verfahren zum Erzeugen ortsspezifischer Informationsdaten in Form von Verkehrsinformationsdaten. Wie die Erzeugung derartiger Informationsdaten vonstatten geht, wird nachfolgend beschrieben.

Jeder der Zellen 11 a bis 11 d ist eine Basisstation 12 zugeordnet. Eine mobile Endeinrichtung 13, im vorliegenden Fall ein Mobiltelefon, kommuniziert in ihrem aktiven Zustand (es wird gerade ein Telefonat geführt) oder in einem Stand-By-Modus (das Gerät ist eingeschaltet, es wird jedoch kein Telefonat geführt) zumindest zeitweilig mit der zur Zelle gehörigen Basisstation, in der sich das Mobiltelefon 13 gerade befindet.

Wenn nun das Mobiltelefon 13 von einer Zelle 11 a in eine Zelle 11 b überwechselt (Handover-Vorgang), findet ein Verbindungsaufbau zwischen dem Mobiltelefon 13 und der Basisstation derjenigen Zelle 11 b statt, in die das Mobiltelefon 13 eintritt. Bei der Kommunikation zwischen Mobiltelefon 13 und Basisstation 12 werden spezifische Daten des Mobiltelefons 13 übertragen, anhand derer das Mobiltelefon 13 charakterisiert werden kann.

Bei einer PKW-Stau-Ermittlung mittels der GSM (Mobilfunk) Datenauswertung wird ein Anruf des Mobiltelefons über mehrere Zellen verfolgt (beispielsweise entlang einer Autobahn) und aus den Zell-Wechsel-Vorgängen die Verkehrsgeschwindigkeit ermittelt. Dabei muss der Anruf über alle Zellen, wohin das Mobiltelefon 13 wechseln könnte, verfolgt werden. Dazu ist vorgesehen, dass aus dem Mitschnitt von spezifischen Daten 20 (beispielsweise der Abis-Daten) zwischen den Basisstationen 12 und Base-Station-Controllern (BSC) 14 aus den Handover-CHNAV-Paketen (Channel-Activation-Paketen) 21, die entsprechenden spezifischen Daten der mobilen Endeinrichtungen 13 herausgelesen und zusammen mit der aktuellen Uhrzeit und Zellidentifikationsdaten an eine Rechnereinheit 16 übertragen werden. Zu diesem Zweck sind die Base-Station-Controller 14 neben ihrer eigentlichen Verbindung mit den Mobil-Switching-Centers (MSC) 15 auch mit wenigstens einer Rechnereinheit 16 verbunden.

In der Rechnereinheit 16 werden die spezifischen Daten 20, 21 der mobilen Endeinrichtungen 13 auf den dynamischen Zellenplan 18 des Kommunikationsnetzes 10 abgebildet. Die einzelnen erzeugten beziehungsweise ermittelten Daten können zumindest zeitweilig in einer der Rechnereinheit 16 zugeordneten Speichereinrichtung 17 abgespeichert werden.

Auf diese Weise wird es möglich, jede mobile Endeinrichtung 13, die einer bestimmten Zelle 11 zugeordnet werden kann, über den Zellenplan 18 auch entsprechenden Segmenten einer Straße 19 zuzuordnen. Es wird somit möglich, für jedes Segment der Straße 19 vorherzusagen, wieviele mobile Endeinrichtungen 13 sich zu einer bestimmten Zeit auf dem Straßensegment befinden. Dadurch lassen sich beispielsweise Aussagen über die Verkehrsdichte auf der Straße 19 machen.

Sollte sich die Größe und/oder Form einer Zelle aufgrund äußerer Umstände über die Zeit verändern, kann dieser Umstand ebenfalls problemlos berücksichtigt werden, da diese Änderungen im Rahmen einer dynamischen Aktualisierung des Zellenplans 18 erfasst werden.

### Bezugszeichenliste

- 10: zellulares Kommunikationsnetz (Mobilfunknetz)
- 11a: Zelle
- 11b: Zelle
- 11c: Zelle
- 11d: Zelle
- 12: Basisstation
- 13: mobile Endeinrichtung (Mobiltelefon)
- 14: Base-Station-Controller (BSC)
- 15: Mobile-Switching-Centre (MSC)
- 16: Rechnereinheit
- 17: Speichereinrichtung
- 18: Zellenplan
- 19: Straße eines Straßennetzes
- 20: spezifische Daten einer mobilen Endeinrichtung
- 21: Handoverdaten einer mobilen Endeinrichtung

## Patentansprüche

1. Verfahren zum Erzeugen/Aktualisieren eines dynamischen Zellenplans (18) eines zellularen Kommunikationsnetzes (10), welches aus einer Anzahl von Zellen (11 a bis 11d) gebildet ist, die in dem Zellenplan (18) zusammengefasst sind, wobei in einer Zelle befindlichen aktiven oder in einem Stand-By-Modus befindlichen mobilen Endeinrichtungen zumindest zeitweilig Zellidentifikationsdaten, die eine genaue Identifikation der Zelle möglich machen, von der Zelle übertragen und zumindest zeitweilig in den mobilen Endeinrichtungen abgespeichert werden und wobei bei einem Zellenwechsel der mobilen Endeinrichtungen von der Zelle in eine nächste, benachbarte Eintrittszelle, in den mobilen Endeinrichtungen von der Eintrittszelle übertragene Zellidentifikationsdaten, die eine genaue Identifikation der Eintrittszelle möglich machen, zumindest zeitweilig abgespeichert werden, **dadurch gekennzeichnet, dass** in vorgegebenen Zeitabständen die in den mobilen Endeinrichtungen abgelegten Zellidentifikationsdaten ausgelesen werden, dass nur dann, wenn sich die ausgelesenen Zellidentifikationsdaten ändern, mittels eines Standort-Ermittlungsverfahrens die genaue Position der mobilen Endeinrichtung ermittelt wird, wobei die Änderung der Zellidentifikationsdaten dem geographischen Ort eines Zellenwechsels entspricht, dass die ausgelesenen Zellidentifikationsdaten dann, wenn sich diese ändern, mit den ermittelten Positionsdaten der mobilen Endeinrichtung verknüpft und daraus Zellwechselortsdaten ermittelt werden, und dass aus den so ermittelten Zellwechselortsdaten der Zellenplan automatisch erzeugt/aktualisiert wird.

2. Verfahren nach Anspruch 1, **dadurch gekennzeichnet, dass** die Zellidentifikationsdaten in vorgegebenen Zeitabständen aus den mobilen Endeinrichtungen ausgelesen werden.

3. Verfahren nach Anspruch 1 oder 2, **dadurch gekennzeichnet, dass** die Zellidentifikationsdaten automatisch oder auf Anforderung (on-demand) ausgelesen werden.

4. Verfahren nach einem der Ansprüche 1 bis 3, **dadurch gekennzeichnet, dass** bei einer Änderung der ausgelesenen Zellidentifikationsdaten auch der Zeitpunkt der Änderung der ausgelesenen Zellidentifikationsdaten mit bestimmt wird.

5. Verfahren nach einem der Ansprüche 1 bis 4, **dadurch gekennzeichnet, dass** die mobile Endeinrichtung Mittel zur satellitengestützten Positionsbestimmung aufweist und dass zumindest bei einer Änderung der ausgelesenen Zellinformationsdaten mittels eines satellitengestützten Standort-Ermittlungsverfahrens die genaue Position der mobilen Endeinrichtung ermittelt wird.

6. Verfahren nach einem der Ansprüche 1 bis 5, **dadurch gekennzeichnet, dass** die ausgelesenen Zellidentifikationsdaten und die ermittelten Positionsdaten in einer Rechnereinheit bearbeitet, insbesondere verknüpft, werden.

7. Verfahren nach einem der Ansprüche 1 bis 6, **dadurch gekennzeichnet, dass** die ausgelesenen Zellidentifikationsdaten und/oder die ermittelten Positionsdaten zumindest temporär in einer Speichereinrichtung abgespeichert werden.

8. Verfahren nach Anspruch 6 oder 7, **dadurch gekennzeichnet, dass** die Rechnereinheit und/oder die Speichereinrichtung der mobilen Endeinrichtung zugeordnet ist/sind und dass die Zellwechselortsdaten innerhalb der mobilen Endeinrichtung erzeugt werden.

9. Verfahren nach Anspruch 6 oder 7, **dadurch gekennzeichnet, dass** die Rechnereinheit und/oder die Speichereinrichtung dem Kommunikationsnetz zugeordnet ist/sind, dass die ausgelesenen Zellidentifikationsdaten und die ermittelten Positionsdaten zur Rechnereinheit übertragen werden und dass die Zellwechselortsdaten innerhalb der Rechnereinheit erzeugt werden.

10. Verfahren nach einem der Ansprüche 1 bis 9, **dadurch gekennzeichnet, dass** die dynamische Erzeugung/Aktualisierung des Zellenplans (18) in definierten Zeitabständen aus den gespeicherten Zellwechselortsdaten erfolgt.

11. Verfahren nach Anspruch 10, **dadurch gekennzeichnet, dass** die erzeugten Zellwechselortsdaten in definierten Zeitabständen zu einer Rechnerzentrale (16) übertragen werden und dass der Zellenplan (18) in der Rechnerzentrale (16) dynamisch erzeugt/aktualisiert wird.

12. Verfahren nach einem der Ansprüche 1 bis 11, **dadurch gekennzeichnet, dass** dieses zur dynamischen Erzeugung/Aktualisierung eines Zellenplans (18) eines zellularen Mobilfunknetzes (10) eingesetzt wird.

13. Verfahren nach einem der Ansprüche 1 bis 12, **dadurch gekennzeichnet, dass** die Erzeugung/Aktualisierung des Zellenplans unter Verwendung von mobilen Endeinrichtungen erfolgt, die als Onboard-Units , OBUs, und/oder als Navigationseinrichtungen in Fahrzeugen ausgebildet sind.

14. System zum Erzeugen/Aktualisieren eines dynamischen Zellenplans (18) eines zellularen Kommunikationsnetzes (10), welches aus einer Anzahl von Zellen (11a bis 11d) gebildet ist, die in dem Zellenplan (18) zusammengefasst sind, **dadurch gekennzeichnet, dass** das System Mittel zur Durchführung des Verfahrens nach einem der Ansprüche 1 bis 13 aufweist.

15. System nach Anspruch 14, **dadurch gekennzeichnet, dass** das Kommunikationsnetz (10) als zellulares Mobilfunknetz ausgebildet ist und dass die mobilen Endeinrichtungen als Mobiltelefone (13) und/oder als Onboard-Units, OBUs, und/oder als Navigationseinrichtungen in Fahrzeugen ausgebildet sind.

## Claims

1. A method of creating/updating a dynamic cell plan (18) of a cellular communications network (10), which is formed from a number of cells (11 a to 11 d), which are combined in the cell plan (18), wherein to mobile end terminals located in a cell, which are active or in a stand-by-mode, cell identification data, which allow a precise identification of the cell, are at least temporarily transmitted from the cell and are stored at least temporarily in the mobile end terminals and wherein on a cell change of the mobile end terminals from the cell into a next, neighbouring entrance cell, cell identification data transmitted from the entrance cell, which allow a precise identification of the entrance cell, being at least temporarily stored in the mobile end terminals, **characterized in that** the cell identification data being stored in the mobile end terminals are read out in predetermined time intervals, that, only when the read out cell identification data change, the exact position of the mobile end terminals is determined by means of a location determination method, whereby the change of the cell identification data represents the geographical location of a cell change, that the read out cell identification data, in case they change, being linked to the determined position data of the mobile end terminal and cell change location data being determined thereof, and that from the thus determined cell change location data the cell plan is automatically created/updated.

2. The method according to claim 1, **characterized in that** the cell identification data are read out from the mobile end terminals at predetermined time intervals.

3. The method according to claim 1 or 2, **characterized in that** the cell identification data are read out automatically or on request (on-demand).

4. The method according to anyone of claims 1 to 3, **characterized in that** on a change of the read out cell identification data the point of time of the change of the read out cell identification data is determined as well.

5. The method according to anyone of claims 1 to 4, **characterized in that** the mobile end terminal comprises means for satellite based position determination and that at least on the change of the read out cell identification data the precise position of the mobile end terminal is determined by means of a satellite based location determination method.

6. The method according to anyone of claims 1 to 5, **characterized in that** the read out cell identification data and the determined position data are processed, particularly linked, in a computer unit.

7. The method according to anyone of claims 1 to 6, **characterized in that** the read out cell identification data and/or the determined position data are at least temporarily stored in a memory device.

8. The method according to claim 6 or 7, **characterized in that** the computer unit and/or the memory device is/are associated to the mobile end terminal and that the cell change location data are generated inside of the mobile end terminal.

9. The method according to claim 6 or 7, **characterized in that** the computer unit and/or the memory device is/are associated to the communications network, that the read out cell identification data and the determined position data being transmitted to the computing unit and that the cell change location data are generated inside the computer unit.

10. The method according to anyone of claims 1 to 9, **characterized in that** the dynamic creating/updating of the cell plan (18) takes place at defined time intervals from the stored cell change location data.

11. The method according to claim 10, **characterized in that** the generated cell change location data being transmitted to a central computer (16) in defined time intervals and that the cell plan (18) being dynamically created/updated in the central computer (16).

12. The method according to anyone of claims 1 to 11, **characterized in that** the method is used for dynamically creating/updating a cell plan (18) of a cellular mobile communications network (10).

13. The method according to anyone of claims 1 to 12, **characterized in that** the creation/updating of the cell plan is performed by use of mobile end terminals which are provided as Onboard-Units, OBUs and/or as navigation devices in vehicles.

14. A system for creating/updating a dynamic cell plan (18) of a cellular communications network (10), which is formed from a number of cells (11 a to 11 d), which are combined in the cell plan (18),**characterized in that** the system comprises means for performing a method according to anyone of claims 1 to 13.

15. The system according to claim 14, **characterized in that** the communications network (10) is formed as a cellular mobile communications network and that the mobile end terminals are provided as mobile phones (13) and/or as Onboard-Units, OBUs and/or as navigation devices in vehicles.

## Revendications

1. Procédé servant à élaborer/mettre à jour un plan cellulaire (18) dynamique d'un réseau de communication (10) cellulaire, qui est formé à partir d'un nombre donné de cellules (11a à 11d), qui sont rassemblées dans le plan cellulaire (18), sachant que des données d'identification de cellules, qui rendent possible une identification précise de la cellule, dans des terminaux actifs mobiles se trouvant dans une cellule ou dans des terminaux mobiles se trouvant dans un mode de veille, sont transmises par la cellule au moins par intermittence et sont mémorisées au moins par intermittence dans les terminaux mobiles et sachant que lors d'un changement de cellule des terminaux mobiles de la cellule en une cellule d'entrée qui suit adjacente, des données d'identification de cellule transmises dans les terminaux mobiles par la cellule d'entrée, lesquelles rendent possible une identification précise de la cellule d'entrée, sont mémorisées au moins par intermittence, **caractérisé en ce qu'**à des intervalles de temps spécifiés, les données d'identification de cellule enregistrées dans les terminaux mobiles sont lues, et **en ce**
**que** seulement lorsque les données d'identification de cellule lues sont modifiées, la position précise du terminal mobile est déterminée au moyen d'un procédé de détermination de site, sachant que la modification des données d'identification de cellule correspond à l'emplacement géographique d'un changement de cellule, **en ce que** les données d'identification de cellule lues lorsqu'elles sont modifiées sont liées aux données de position déterminées du terminal mobile et que des données d'emplacement de changement de cellule sont déterminées à partir de ces données, et **en ce que** le plan cellulaire est automatiquement élaboré/mis à jour à partir des données d'emplacement de changement de cellule ainsi déterminées.

2. Procédé selon la revendication 1, **caractérisé en ce que** les données d'identification de cellule sont lues à des intervalles de temps spécifiés à partir des terminaux mobiles.

3. Procédé selon la revendication 1 ou 2, **caractérisé en ce que** les données d'identification de cellule sont lues automatiquement ou sur demande (on-demand).

4. Procédé selon l'une quelconque des revendications 1 à 3, **caractérisé en ce qu'**en cas d'une modification des données d'identification de cellule lues, le moment de la modification des données d'identification de cellule lues est également dans le même temps déterminé.

5. Procédé selon l'une quelconque des revendications 1 à 4, **caractérisé en ce que** le terminal mobile présente des moyens servant à la détermination de position assistée par satellite, et **en ce qu'**au moins lors d'une modification des données d'information de cellule lues, la position précise du terminal mobile est calculée au moyen d'un procédé de calcul de site assisté par satellite.

6. Procédé selon l'une quelconque des revendications 1 à 5, **caractérisé en ce que** les données d'identification de cellule lues et les données de position calculées sont traitées, en particulier sont combinées, dans une unité de calcul.

7. Procédé selon l'une quelconque des revendications 1 à 6, **caractérisé en ce que** les données d'identification de cellule lues et/ou les données de position calculées sont mémorisées au moins de manière temporaire dans un dispositif de stockage.

8. Procédé selon la revendication 6 ou 7, **caractérisé en ce que** l'unité de calcul et/ou le dispositif de stockage sont associés au terminal mobile, et **en ce que** les données d'emplacement de changement de cellule sont élaborées dans le terminal mobile.

9. Procédé selon la revendication 6 ou 7, **caractérisé en ce que** l'unité de calcul et/ou le dispositif de stockage sont associés au réseau de communication, **en ce que** les données d'identification de cellule lues et les données de position calculées sont transmises à l'unité de calcul, et **en ce que** les données d'emplacement de changement de cellule sont élaborées dans l'unité de calcul.

10. Procédé selon l'une quelconque des revendications 1 à 9, **caractérisé en ce que** l'élaboration/la mise à jour dynamique du plan cellulaire (18) sont effectuées, à des intervalles de temps définis, à partir des données d'emplacement de changement de lieu stockées.

11. Procédé selon la revendication 10, **caractérisé en ce que** les données d'emplacement de changement de lieu élaborées sont transmises à des intervalles de temps définis à une centrale de calcul (16), et **en ce que** le plan cellulaire (18) est élaboré/mis à jour de manière dynamique dans la centrale de calcul (16).

12. Procédé selon l'une quelconque des revendications 1 à 11, **caractérisé en ce que** ledit procédé est utilisé aux fins de l'élaboration/de la mise à jour dynamique d'un plan cellulaire (18) d'un réseau de téléphonie mobile (10) cellulaire.

13. Procédé selon l'une quelconque des revendications 1 à 12, **caractérisé en ce que** l'élaboration/la mise à jour du plan cellulaire sont effectuées en utilisant des terminaux mobiles, qui sont réalisés dans des véhicules sous la forme d'unités embarquées (OBU), et/ou
sous la forme de dispositifs de navigation.

14. Système servant à élaborer/mettre à jour un plan cellulaire (18) dynamique d'un réseau de communication (10) cellulaire, qui est formé à partir d'un nombre donné de cellules (11a à 11d), qui sont rassemblées dans le plan cellulaire (18), **caractérisé en ce que** le système présente des moyens servant à mettre en oeuvre le procédé selon l'une quelconque des revendications 1 à 13.

15. Système selon la revendication 14, **caractérisé en ce que** le réseau de communication (10) est réalisé sous la forme d'un réseau de téléphonie mobile cellulaire, et **en ce**
**que** les terminaux mobiles sont réalisés dans des véhicules sous la forme de téléphones mobiles (13), et/ou
sous la forme d'unités embarquées (OBU) et/ou sous la forme de dispositifs de navigation.
